# EUROPEAN PATENT SPECIFICATION

(11) **EP 2 684 755 B1**
(45) Date of publication and mention of the grant of the patent: **26.10.2016**
(21) Application number: 12758118.9
(22) Date of filing: 01.03.2012
(51) Int. Cl.: B60W 10/10, B60K 6/36, B60K 6/48, B60K 6/547, B60W 20/00, F16H 3/091, F16H 63/20, F16H 63/30

(54) **MANUAL TRANSMISSION**
HANDSCHALTUNG
BOÎTE DE VITESSES MANUELLE

(30) Priority: 11.03.2011 JP 2011053757
(43) Date of publication of application: 15.01.2014
(73) Proprietor: Aisin AI Co., Ltd., Nishio-shi, Aichi 445-0006 (JP)
(72) Inventor: OSUKA Shinya, Nishio-shi, Aichi 445-0006 (JP)
(74) Representative: Ettmayr, Andreas
(86) International application number: PCT/JP2012/055217
(87) International publication number: WO 2012/124493

(56) References cited:
- EP-A1- 2 045 160
- EP-A1- 2 199 136
- WO-A1-2009/051143
- JP-A- 2010 208 523
- US-A- 4 621 536
- US-A1- 2010 234 169

## Description

### TECHNICAL FIELD

The present invention relates to a manual transmission applied to a vehicle which has an internal combustion engine and an electric motor as power sources, and more particularly to a manual transmission applied to a vehicle which includes a friction clutch disposed between the output shaft of the internal combustion engine and the input shaft of the manual transmission.

### BACKGROUND ART

Conventionally, there has been widely known a so-called hybrid vehicle which includes an engine and an electric motor as power sources (see, for example, Japanese Patent Application Laid-Open (*kokai*) No. 2000-224710). In such a hybrid vehicle, there can be employed a structure in which the output shaft of the electric motor is connected to one of the output shaft of the internal combustion engine, the input shaft of a transmission, and the output shaft of the transmission. In the following description, drive torque from the output shaft of the internal combustion engine will be referred to as "engine drive torque," and drive torque from the output shaft of the electric motor as "motor drive torque."

In recent years, there has been developed a power transmission control apparatus applied to a hybrid vehicle which includes a manual transmission and a friction clutch (hereinafter referred to as an "HV-MT vehicle"). The term "manual transmission" used herein refers to a transmission which does not include a torque converter and whose gear stage is selected in accordance with the shift position of a shift lever operated by a driver (the manual transmission is denoted by MT). Also, the term "friction clutch" used herein refers to a clutch which is interposed between the output shaft of the internal combustion engine and the input shaft of the manual transmission and which is configured such that the engagement state of a friction plate changes in accordance with the operation quantity of a clutch pedal operated by the driver. EP 2 045 160 A1 discloses a manual transmission. In the transmission known from EP 2 045 160 A1, it is not possible to rotate and drive the output shaft of the electric motor while maintaining the vehicle in a stopped state. Further, the transmission known from EP 2 045 160 A1 does not always allow to readily maintain the rotational speed of the output shaft in a range with a satisfactorily high energy conversion efficiency. EP 2 199 136 A1 discloses a manual transmission according to the preamble part of claim 1 wherein a first power interrupting mechanism switches the connection between the input shaft of a multistaged change-speed mechanism and a rotor of controlled rotary electric device and a second power interrupting mechanism switches the connection between a rotary-electric-device-side output shaft, which is provided for outputting power to wheels, and the rotor of the rotary electric device. US 2010/234169 A1 discloses a transmission with a changeover mechanism capable to change a connection state of an electric motor output shaft to "an IN-Connection State" in which a power transmission path is provided between a transmission input shaft and the electric motor output shaft, "an OUT-Connection State" in which a power transmission path is provided between the transmission output shaft and the electric motor output shaft, and "a neutral connection state" in which no transmission path therebetween is provided.

### SUMMARY OF THE INVENTION

In the following description, two states are assumed for the HV-MT; i.e., a state in which the output shaft of the electric motor is connected to the input shaft of the transmission in a power transmissible manner (hereinafter referred to as an "IN connection state"), and a state in which the output shaft of the electric motor is connected to the output shaft of the transmission in a power transmissible manner (hereinafter referred to as an "OUT connection state").

In the IN connection state, the rotational speed of the output shaft of the electric motor for a certain vehicle speed can be changed by changing the gear stage of the transmission. This is advantageous in that, through adjustment of the gear stage of the transmission, the rotational speed of the output shaft of the electric motor is readily maintained in a range in which its energy conversion efficiency (more specifically, the efficiency in generation of drive torque, regeneration torque, etc.) is satisfactorily high. Also, when the transmission is in a neutral state (a state in which no power transmission system (route) is established between the input and output shafts), it is possible to rotate and drive the output shaft of the electric motor while maintaining the vehicle in a stopped state, by operating the internal combustion engine and bringing the friction clutch into an engaged state. This is also advantageous in that electrical power generated by the electric motor in a state in which the vehicle is stopped can be stored in a battery.

Meanwhile, in the OUT connection state, a power transmission system is established without intervention of the transmission having a complicated mechanism. This is advantageous in that power transmission loss can be reduced. This is also advantageous in that, when the transmission is in a state (the neutral or a gear stage (EV) different from the neutral) in which no power transmission system is established between the input and output shafts thereof and the friction clutch is an engaged state, there can be realized a state in which the vehicle travels through use of motor drive torque only (hereinafter referred to as "EV travel") with the internal combustion engine maintained in a stopped state (a state in which rotation of the output shaft of the internal combustion engine is stopped).

In view of the above, a connection changeover mechanism may be provided for a manual transmission applied to an HV-MT vehicle so as to selectively realize the IN connection state and the OUT connection state. In the case where the connection changeover mechanism is provided, the transmission of torque between the electric motor and the transmission must be inevitably stopped temporarily when the connection state of the output shaft of the electric motor is changed. Accordingly, a shock (a change in acceleration of the vehicle in the front-rear direction thereof) is unavoidably generated as a result of changing the connection state of the output shaft of the electric motor. Generation of such a shock provides an unpleasant sensation to the driver.

An object of the present invention is to provide a manual transmission for an HV-MT vehicle which includes a connection changeover mechanism for selectively realizing the IN connection state and the OUT connection state and which makes a driver less likely to sense a shock generated as a result of changing the connection state of the output shaft of an electric motor.

A manual transmission according to the present invention is defined in claim 1.

The transmission mechanism (M1) selectively enters any of a plurality of gear stages (EV gear stage, 2-nd gear to 5-th gear stages) (other than the neutral) when a shift operation member (SL) is selectively moved on a shift pattern to respective shift completion positions corresponding to the plurality of gear stages. In each gear stage, a power transmission system may or may not be established between the input and output shafts. An example gear stage (other than the neutral) in which no power transmission system is established between the input and output shafts is a gear stage for EV travel. In a gear state in which a power transmission system is established between the input and output shafts, the power transmission system has a transmission speed reduction ratio corresponding to the gear stage.

The connection changeover mechanism (M2) is configured to switch the connection state of the output shaft of the electric motor (from an IN connection state to an OUT connection state or vice versa) when the shift operation member passes through a predetermined position on the shift pattern other than the shift completion positions.

When the connection state of the output shaft of the electric motor is to be changed, a driver must operate the shift operation member on the shift pattern. In general, a human being becomes less likely to sense a shock or the like from the outside, when he or she performs some operation. The above-described configuration is employed in view of this fact.

According to the above-described configuration, the connection state of the output shaft of the electric motor is changed while the driver is operating the shift operation member. In other words, the drive receives a shock generated as a result of changing the connection state of the output shaft of the electric motor, while operating the shift operation member. Accordingly, the driver becomes less likely to sense the shock.

In the manual transmission, the moving operation of the shift operation member to one of the respective shift completion positions corresponding to the plurality of gear stages is achieved by setting the position of the shift operation member to a corresponding selection position through a selection operation which is an operation in the left-right direction of the vehicle in a state in which no power transmission system is established between the input shaft and the output shaft, and subsequently moving the shift lever from the corresponding selection position to a corresponding shift completion position through a shift operation which is an operation in the front-rear direction of the vehicle.

In this case, the connection state of the output shaft of the electric motor may be changed when the shift operation member which moves in the left-right direction of the vehicle during the selection operation passes through a predetermined position in the left-right direction of the vehicle.

Advantageous embodiments may be configured according to any of the dependent claims.

### BRIEF DESCRIPTION OF THE DRAWINGS

FIG. 1 is a schematic diagram of a power transmission control apparatus which includes a manual transmission for an HV-MT vehicle according to an embodiment of the present invention in a state in which an N position is selected.
FIG. 2 is a schematic diagram showing the positional relation between an S&S shaft and a plurality of fork shafts in a state in which the N position is selected.
FIG. 3 is a diagram used for explaining an "IN connection region" and an "OUT connection region" on a shift pattern.
FIG. 4 is an enlarged view of a portion Z of FIG. 2 showing a state (IN connection state) of a connection changeover mechanism in a state in which the N position is selected.
FIG. 5 is a view corresponding to FIG. 4 and used for explaining an operation when changeover from the IN connection state to the OUT connection state is performed in response to a shift operation from an EV-2 selection position to an EV gear shift completion position.
FIG. 6 is a view corresponding to FIG. 4 and used for explaining an operation when changeover from the OUT connection state to the IN connection state is performed in response to a shift operation from the EV gear shift completion position to the EV-2 selection position.
FIG. 7 is a view corresponding to FIG. 4 and used for explaining an operation when changeover from the IN connection state to the OUT connection state is performed in response to a shift operation from the EV-2 selection position to a 2-nd gear shift completion position.
FIG. 8 is a view corresponding to FIG. 4 and used for explaining an operation when changeover from the OUT connection state to the IN connection state is performed in response to a shift operation from the 2-nd gear shift completion position to the EV-2 selection position.
FIG. 9 is a diagram corresponding to FIG. 1 in a state in which an EV gear position is selected.
FIG. 10 is a diagram corresponding to FIG. 2 in a state in which the EV gear position is selected.
FIG. 11 is a diagram corresponding to FIG. 1 in a state in which a 2-nd gear position is selected.
FIG. 12 is a diagram corresponding to FIG. 2 in a state in which the 2-nd gear position is selected.
FIG. 13 is a diagram corresponding to FIG. 1 in a state in which a 3-rd gear position is selected.
FIG. 14 is a diagram corresponding to FIG. 2 in a state in which the 3-rd gear position is selected.
FIG. 15 is a diagram corresponding to FIG. 1 in a state in which a 4-th gear position is selected.
FIG. 16 is a diagram corresponding to FIG. 2 in a state in which the 4-th gear position is selected.
FIG. 17 is a diagram corresponding to FIG. 1 in a state in which a 5-th gear position is selected.
FIG. 18 is a diagram corresponding to FIG. 2 in a state in which the 5-th gear position is selected.

### MODE FOR CARRYING OUT THE INVENTION

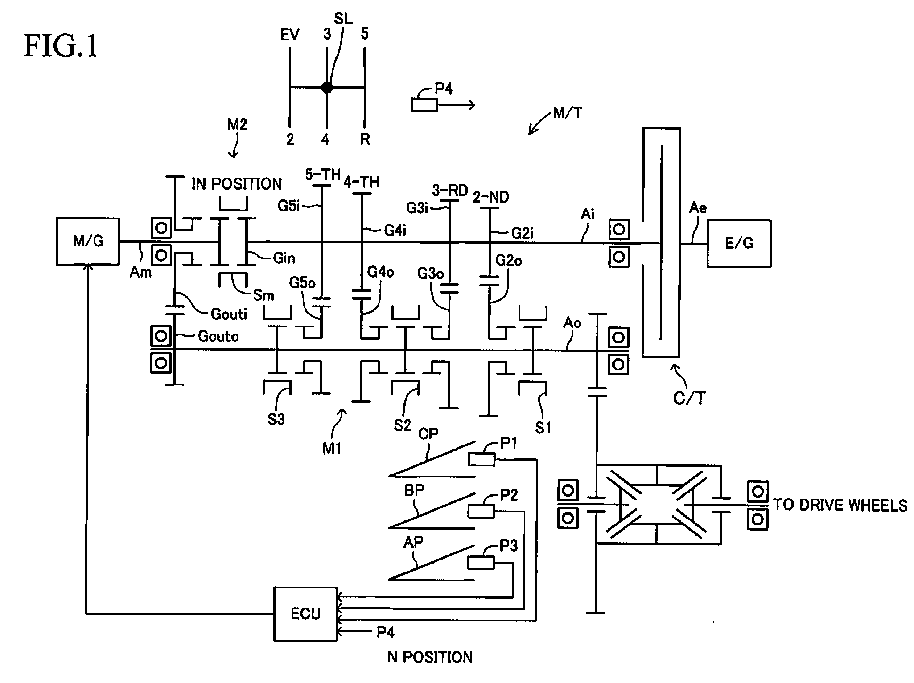

An example of a power transmission control apparatus of a vehicle which includes a manual transmission M/T according to an embodiment of the present invention (hereinafter referred to as the "present apparatus") will now be described with reference to the drawings. As shown in FIG. 1, the present apparatus is applied to a "vehicle which includes an engine E/G and a motor generator M/G as power sources, and also includes a manual transmission M/T, which does not include a torque converter, and a friction clutch C/T"; i.e., the above-described "HV-MT vehicle." This "HV-MT vehicle" may be a front wheel drive vehicle, a rear wheel drive vehicle, or a four wheel drive vehicle.

### (Overall Structure)

First, the overall structure of the present apparatus will be described. The engine E/G is a well known internal combustion engine, such as a gasoline engine which uses gasoline as fuel, or a diesel engine which uses light oil as fuel.

The manual transmission M/T is a transmission which does not include a torque converter and whose gear stage is selected in accordance with the shift position of a shift lever SL operated by a driver. The manual transmission M/T has an input shaft Ai for receiving power from an output shaft Ae of the engine E/G, an output shaft Ao for outputting power to drive wheels of the vehicle, and an MG shaft Am for receiving power from the motor generator M/G. The input shaft Ai, the output shaft Ao, and the MG shaft Am are disposed in parallel with one another. In the example shown in FIG. 1, the MG shaft Am is disposed coaxial with the input shaft Ai. The details of the structure of the manual transmission M/T will be described later.

The friction clutch C/T is disposed between the output shaft Ae of the engine E/G and the input shaft Ai of the manual transmission M/T. The friction clutch C/T is a well known clutch configured such that the engagement state of a friction plate (more specifically, the axial position of a friction plate, which rotates together with the input shaft Ai, in relation to a fry-wheel, which rotates together with the output shaft Ae) changes in accordance with an operation quantity (depression amount) of a clutch pedal CP operated by the driver.

The engagement state of the friction clutch C/T (the axial position of the friction plate) may be mechanically adjusted in accordance with the operation quantity of the clutch pedal CP, by making use of a link mechanism or the like which mechanically connects the clutch pedal CP to the friction clutch C/T (the friction plate). Alternatively, the engagement state of the friction clutch C/T may be electrically adjusted by making use of drive force of an actuator which operates in accordance with the operation quantity of the clutch pedal CP detected by a sensor (a sensor P1 to be described later) (by a so-called by-wire scheme).

The motor generator M/G has a well known structure (e.g., an AC synchronous motor), and its rotor (not illustrated) rotates together with the MG shaft Am. In the following description, drive torque from the output shaft Ae of the engine E/G will be referred to as "EG torque," and drive torque from the MG shaft Am (torque from the output shaft of the motor generator M/G) as "MG torque."

The present apparatus includes a clutch operation quantity sensor P1 which detects the operation quantity (depression amount, clutch stroke, etc.) of the clutch pedal CP, a brake operation quantity sensor P2 which detects the operation quantity (depression force, presence/absence of operation, etc.) of a brake pedal BP, an accelerator operation quantity sensor P3 which detects the operation quantity (accelerator opening) of an accelerator pedal AP, and a shift position sensor P4 which detects the position of the shift lever SL.

Moreover, the present apparatus includes an electronic control unit (hereinafter simply referred to as the "ECU"). On the basis of information, among others, from the above-mentioned sensors P1 to P4 and other sensors, etc., the ECU controls the EG torque by controlling the fuel injection amount of the engine E/G (opening of its throttle valve) and controls the MG torque by controlling an inverter (not shown).

### (Structure of M/T)

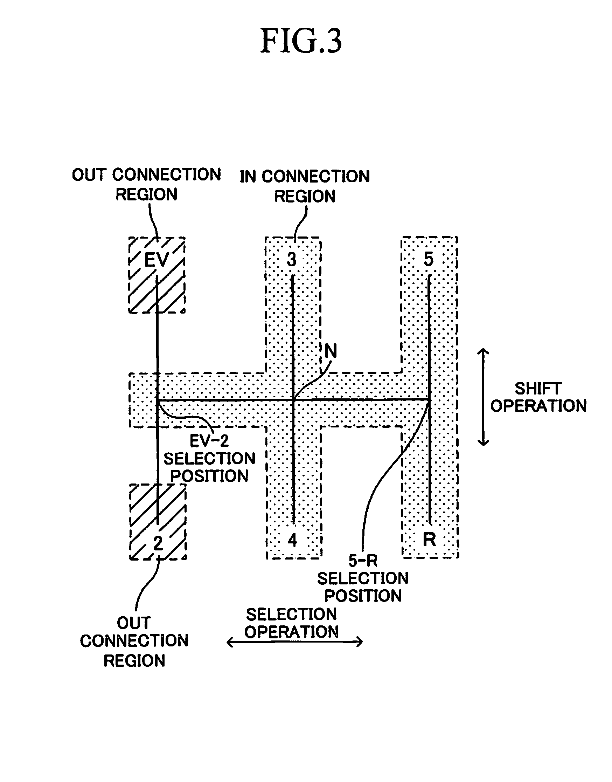

The structure of the manual transmission M/T will be described specifically with reference to FIGS. 1 to 3. As can be understood from FIG. 1 and the shift pattern of the shift lever SL shown in FIG. 3, in the present example, five forward gear stages (an EV gear stage and 2-nd to a 5-th gear stages) and a single reverse gear stage (R) are provided as selectable gear stages (shift completion positions). In the following description, description regarding the reverse gear stage (R) is not provided.

As shown in the shift pattern of FIG. 3, an operation of the shift lever SL in the left-right direction of the vehicle will be referred to as a "selection operation," and an operation of the shift lever SL in the front-rear direction of the vehicle will be referred to as a "shift operation." As shown in FIG. 3, on the shift pattern, the position of an intersection between the locus of the selection operation and the locus of the shift operation between the "shift completion position of the EV gear" and the "the shift completion position of the 2-nd gear" will be referred to as an "EV-2 selection position"; the position of an intersection between the locus of the selection operation and the locus of the shift operation between the "shift completion position of the 3-rd gear" and the "the shift completion position of the 4-th gear" will be referred to as an "N position" (or a "3-4 selection position"); and the position of an intersection between the locus of the selection operation and the locus of the shift operation between the "shift completion position of the 5-th gear" and the "the shift completion position of the R gear" will be referred to as a "5-R selection position." Also, a range (a range which extends in the left-right direction of the vehicle and which includes the "EV-2 selection position," the "N position," and the "5-R selection position") in which the shift lever SL can be moved by the selection operation will be referred to as a "neutral range."

In the following, in order to facilitate description, a state in which the MG shaft Am is connected to the input shaft Ai of the manual transmission M/T (without being connected the output shaft Ao of the manual transmission M/T) in a power transmissible manner will be referred to as an "IN connection state"; and a state in which the MG shaft Am is connected to the output shaft Ao of the manual transmission M/T (without being connected the input shaft Ai of the manual transmission M/T) in a power transmissible manner will be referred to as an "OUT connection state." Also, the "ratio of the rotational speed of the input shaft Ai to that of the "output shaft Ao" will be referred to as a "MT speed reduction ratio."

The manual transmission M/T includes sleeves S1, S2, S3, and Sm. The sleeves S1, S2, and S3 are an "EV gear - 2-nd gear" changeover sleeve, a "3-rd gear - 4-th gear" changeover sleeve, and a "5-th gear - R gear" changeover sleeve, which are fitted onto corresponding hubs which rotate together with the output shaft Ao such that the sleeves cannot rotate relative to the corresponding hubs but can move in the axial direction relative to the corresponding hubs. The sleeve Sm is a sleeve for switching the connection state of the MG shaft Am, and is fitted onto a hub which rotates together with the MG shaft Am such that the sleeve cannot rotate relative to the hub but can move in the axial direction relative to the hub.

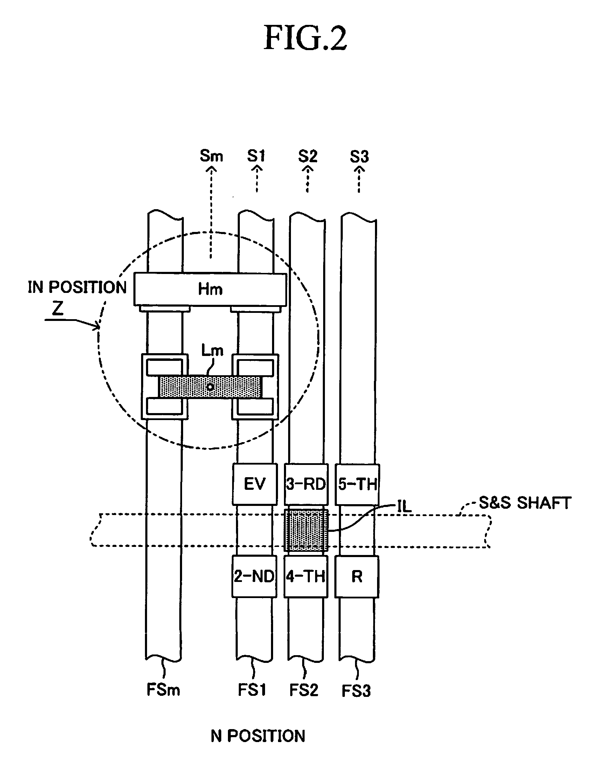

As can be understood from FIG. 2, the sleeves S1, S2, S3, and Sm are integrally coupled with fork shafts FS1, FS2, FS3, and a moving member Hm. When an inner lever IL (shown by hutching in FIG. 2) provided on the S&S shaft linked to the shift lever SL moves in the vertical direction of FIG. 2 (in the left-right direction in FIG. 1) at the time of the shift operation, the shafts and member FS1, FS2, FS3, and Hm (accordingly, the sleeves S1, S2, S3, and Sm) are selectively driven by the inner lever IL in the vertical direction of FIG. 2 (in the left-right direction in FIG. 1) (details will be described later).

Notably, the S&S shaft shown in FIG. 2 is a "shift-rotation type" S&S shaft which translates in the axial direction as a result of the selection operation (in FIG. 1, operation in the left-right direction), and rotates about the axis as a result of the shift operation (in FIG. 1, operation in the vertical direction). However, the S&S shaft may be a "selection-rotation type" S&S shaft which rotates about the axis as a result of the selection operation, and translates in the axial direction as a result of the shift operation.

### <Changeover of the connection state of the MG shaft>

First, changeover of the connection state of the MG shaft will be described with reference to FIGS. 3 to 8. As shown in FIG. 3, an "IN connection region" (see a region indicated by fine dots) and an "OUT connection region"(a region indicated by hatching) are defined.

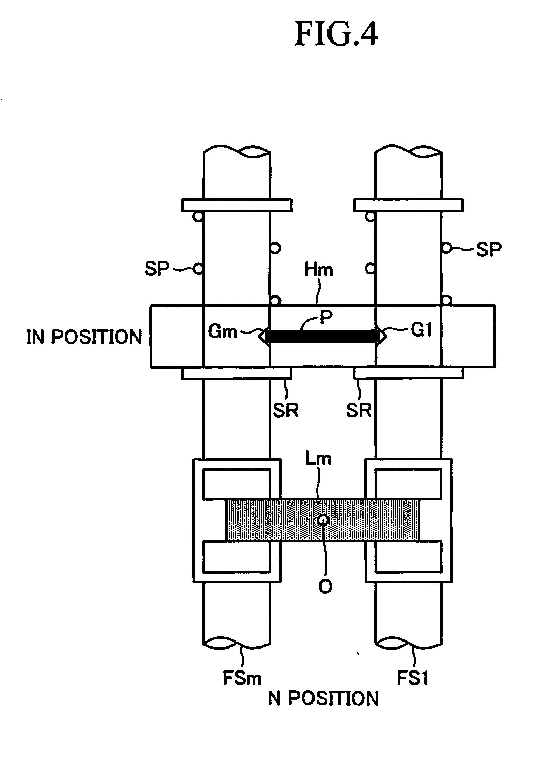

The changeover of the connection state of the MG shaft is performed when the position of the shift lever SL moves from the "IN connection region" to the "OUT connection region" (or vice versa) (i.e., when the shift lever position passes through the above-mentioned "predetermined position," the above-mentioned "first changeover position", or the above-mentioned "second changeover position") during the shift operation. This feature will be described with reference to FIGS. 4 to 8.

As shown in FIG. 4, the fork shaft FS1 and the changeover shaft FSm, which are disposed in parallel with each other, are inserted into corresponding through holes formed in the moving member Hm such that the shafts are relatively movable in the axial direction (in the vertical direction of FIG. 4). Downward movement (in FIG. 4) of the moving member Hm relative to the shafts FS1, FSm is limited by snap rings SR, SR fixed to the shafts FS1, FSm. The moving member Hm is always urged downward in FIG. 4 relatively to the shafts FS1, FSm by springs SP, SP provided on the shafts FS1, FSm.

A pin P is inserted into the moving member Hm such that the pin P can move in the left-right direction of FIG. 4. The pin P can selectively engage with a groove G1 formed on the side surface of the shaft FS1 and a groove Gm formed on the side surface of the shaft FSm in a state in which the moving member Hm is engaged with the snap rings SR, SR.

The shafts FS1 and FSm are coupled with opposite ends of a lever Lm which turns about a fulcrum O. Therefore, when the shaft FS1 moves toward one side in the axial direction (the vertical direction of FIG. 4), the shaft FSm moves toward the opposite side in the axial direction.

FIG. 4 shows a state in which the shift lever SL is in the N position (more accurately, in the neutral range). In this state, both the shafts FS1 and FSm are in their neutral positions. The moving member Hm can move relative to the shafts FS1 and FSm. However, the urging force of the above-mentioned springs SP, SP fixes the moving member Hm at a position where it is engaged with the snap rings SR, SR. Accordingly, the pin P engages with none of the grooves G1, Gm. In the following description, this position of the moving member Hm (and the sleeve Sm united with the moving member Hm) will be called "IN position."

As shown in FIG. 1, when the sleeve Sm is in the IN position, the sleeve Sm engages with a stationary gear Gin provided on the input shaft Ai. As a result, a power transmission system is established between the MG shaft Am and the input shaft Ai. In this manner, when the shift lever SL is in the N position (more accurately, in the neutral range), the "IN connection state" is realized.

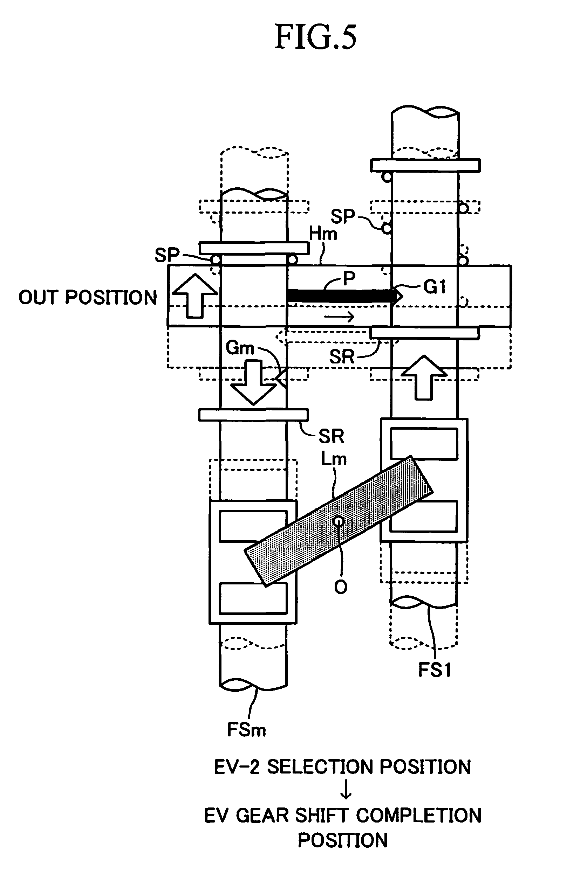

FIG. 5 shows the case where the shift lever SL moves from the neutral position (more accurately, the EV-2 selection position) to the EV gear shift completion position. In this case, the shaft FS1 is pushed by the inner lever IL whereby the shaft FS1 is driven upward in FIG. 5. As a result, by the action of the spring SR fixed to the shaft FS1, the moving member Hm moves upward in FIG. 5 together with the shaft FS1. In contrast, by the action of the lever Lm, the shaft FSm moves downward in FIG. 5. As a result, the vertical position of the pin P deviates from that of the groove Gm, although the vertical position of the pin P does not deviate from that of the groove G1. Therefore, the pin P moves rightward in FIG. 5 and engages with the groove G1 only, whereby the moving member Hm is integrally coupled with the shaft FS1 (the member Hm is maintained in a state in which it is movable in relation to the shaft FSm).

As a result of the moving member Hm being integrally coupled with the shaft FS1 as described above, the moving member Hm (accordingly, the sleeve Sm) moves from the "IN position" to an upper position in FIG. 5 as the shaft FS1 moves from the neutral position to the EV gear position (moves upward in FIG. 5). In the following description, this position of the moving member Hm (and the sleeve Sm) will be called "OUT position."

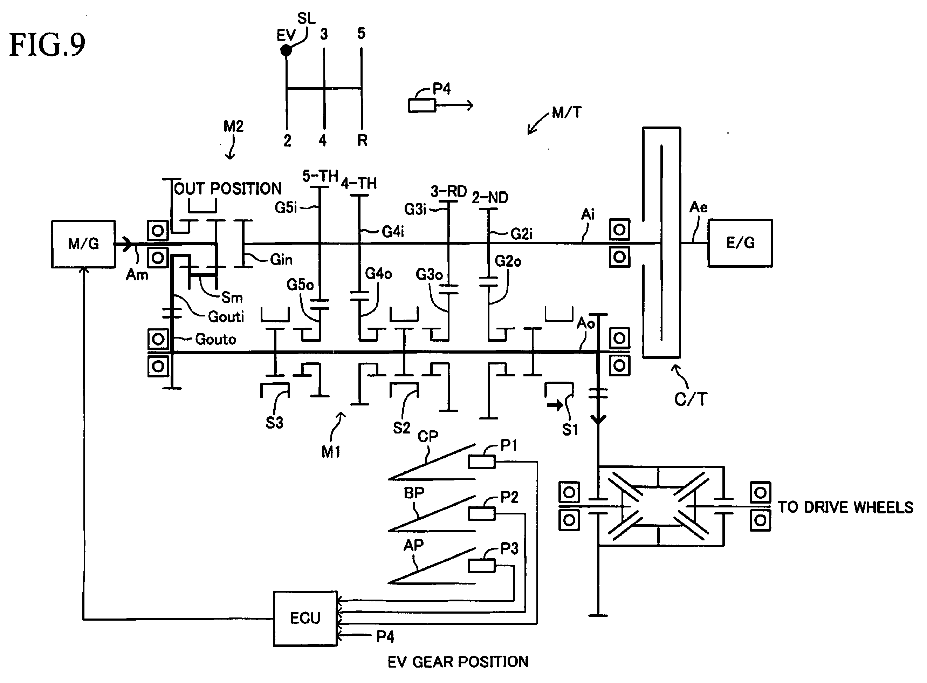

As shown in FIG. 9, which will be described later, when the sleeve Sm is in the OUT position, the sleeve Sm engages with an idle gear Gouti provided on the MG shaft Am to be rotatable in relation thereto. The idle gear Gouti always meshes with a stationary gear Gouto provided on the output shaft Ao. As a result, a power transmission system is established between the MG shaft Am and the output shaft Ao. In this manner, when the shift lever SL moves from the EV-2 selection position to the EV gear shift completion position (when the shift lever SL passes through the above-mentioned "first changeover position"), the connection state of the MG shaft is changed from the "IN connection state" to the "OUT connection state."

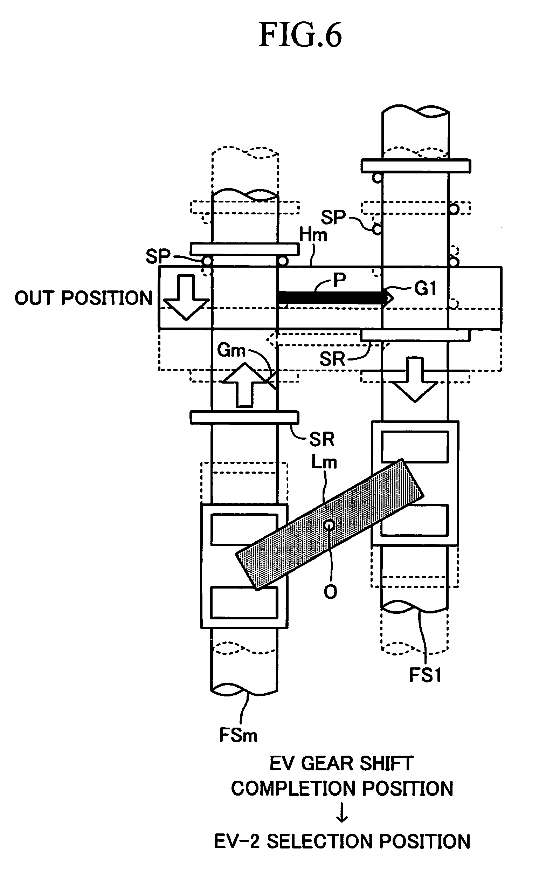

FIG. 6 shows the case where the shift lever SL returns from the EV gear shift completion position to the neutral position (more accurately, the EV-2 selection position). In this case, the shaft FS1 is pushed by the inner lever IL whereby the shaft FS1 returns from the EV gear position to the neutral position. With this operation, the moving member Hm, which is integrally coupled with the shaft FS1, returns from the "OUT position" to the "IN position," and the shaft FSm also returns to the neutral position. That is, the state shown in FIG. 4 is obtained again. In this manner, when the shift lever SL returns from the EV gear shift completion position to the EV-2 selection position (when the shift lever SL passes through the above-mentioned "first changeover position"), the connection state of the MG shaft returns from the "OUT connection state" to the "IN connection state."

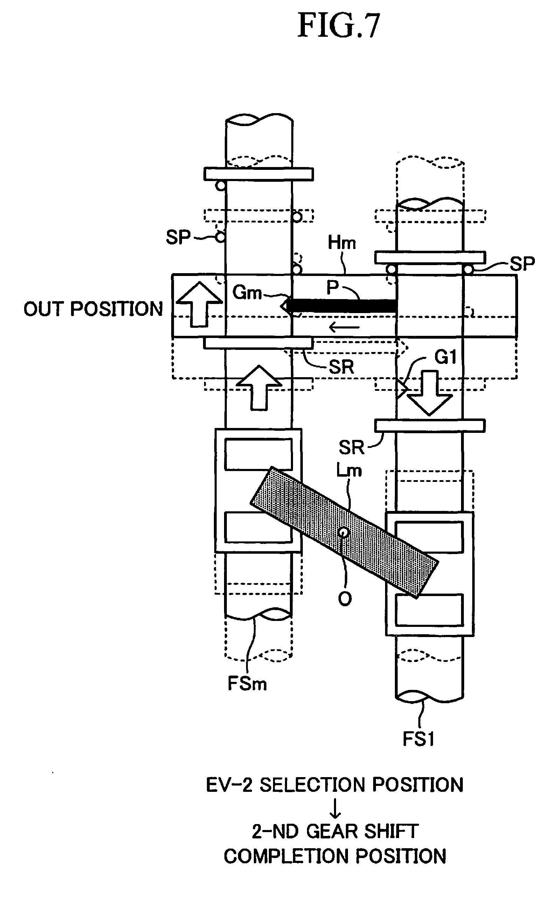

FIG. 7 shows the case where the shift lever SL moves from the neutral position (more accurately, the EV-2 selection position) to the 2-nd gear shift completion position. In this case, the shaft FS1 is pushed by the inner lever IL whereby the shaft FS1 is driven downward in FIG. 7, and the shaft FSm is driven upward in FIG. 7. As a result, by the action of the snap ring SR, the moving member Hm is moved upward in FIG. 7 together with the shaft FSm. Therefore, the vertical position of the pin P deviates from that of the groove G1, although the vertical position of the pin P does not deviate from that of the groove Gm. Therefore, the pin P moves leftward in FIG. 7 and engages with the groove Gm only, whereby the moving member Hm is integrally coupled with the shaft FSm (the member Hm is maintained in a state in which it is movable in relation to the shaft FS1).

As a result of the moving member Hm being integrally coupled with the shaft FSm as described above, the moving member Hm (accordingly, the sleeve Sm) moves from the "IN position" to the "OUT position" as the shaft FS1 moves from the neutral position to the 2-nd gear position (moves downward in FIG. 7); i.e., as the shaft FSm moves upward from the neutral position in FIG. 5. In this manner, when the shift lever SL moves from the EV-2 selection position to the 2-nd gear shift completion position (when the shift lever SL passes through the above-mentioned "second changeover position"), the connection state of the MG shaft is changed from the "IN connection state" to the "OUT connection state."

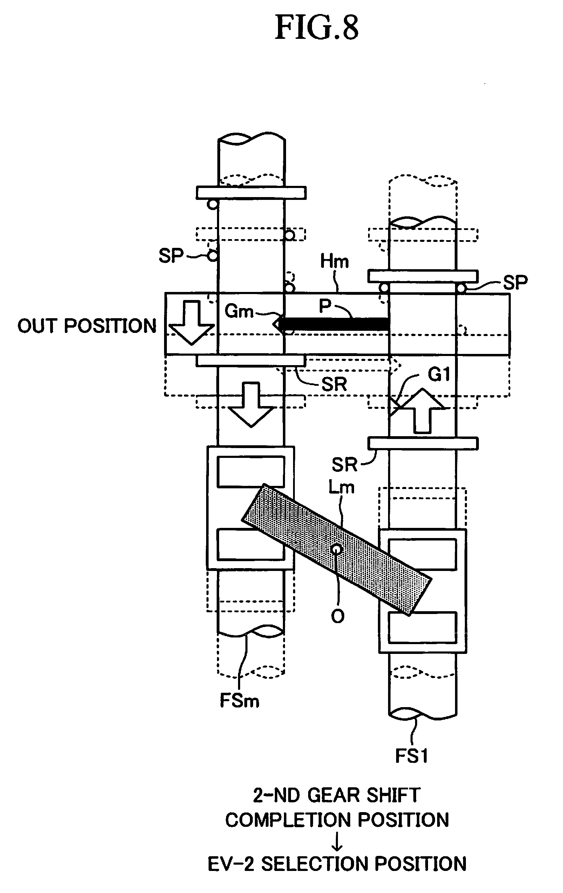

FIG. 8 shows the case where the shift lever SL returns from the 2-nd gear shift completion position to the neutral position (more accurately, the EV-2 selection position). In this case, the shaft FS1 is pushed by the inner lever IL whereby the shaft FS1 returns from the 2-nd gear position to the neutral position, and the shaft FSm also returns to the neutral position. With this operation, the moving member Hm, which is integrally coupled with the shaft FSm, returns from the "OUT position" to the "IN position." That is, the state shown in FIG. 4 is obtained again. In this manner, when the shift lever SL returns from the 2-nd gear shift completion position to the EV-2 selection position (when the shift lever SL passes through the above-mentioned "second changeover position"), the connection state of the MG shaft returns from the "OUT connection state" to the "IN connection state."

By virtue of the above-described operation, when the shift lever SL is in the IN connection region in the shift pattern shown in FIG. 3, the "IN connection state" is maintained; and, when the shift lever SL is in the OUT connection region in the shift pattern, the "OUT connection state" is maintained. When the shift lever SL moves from the IN connection region to the OUT connection region (or vice versa), changeover from the "IN connection state" to the "OUT connection state" (or from the "OUT connection state" to the "IN connection state") is performed. More specifically, the "IN connection state" is maintained when the shift lever SL is in the neutral position and when the shift lever SL moves from the neutral position to any of the shift complete positions of "gear stages other than the EV gear and the 2-nd gear" (3-rd to 5-th gears) (or vice versa). Meanwhile, the changeover from the "IN connection state" to the "OUT connection state" (or from the "OUT connection state" to the "IN connection state") is performed when the shift lever moves from the neutral position to any of the shift completion positions of the "EV gear" and the "2-nd gear" (the above-mentioned first and second gear stages) (or vice versa).

As described above, the manual transmission M/T includes the connection changeover mechanism M2, which selectively realizes the "IN connection state" and the "OUT connection state." The connection changeover mechanism M2 is configured by the sleeve Sm, the moving member Hm, the fork shaft FS1, the changeover shaft FSm, the pin P, the grooves G1, Gm, the snap rings SR, SR, the springs SP, SP, the stationary gears Gin, Gouto, the idle gear Gouti, etc.

### <Changeover of the gear stage>

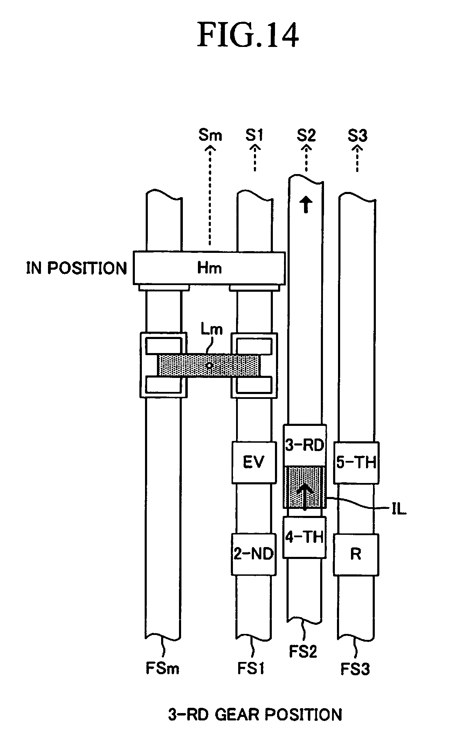

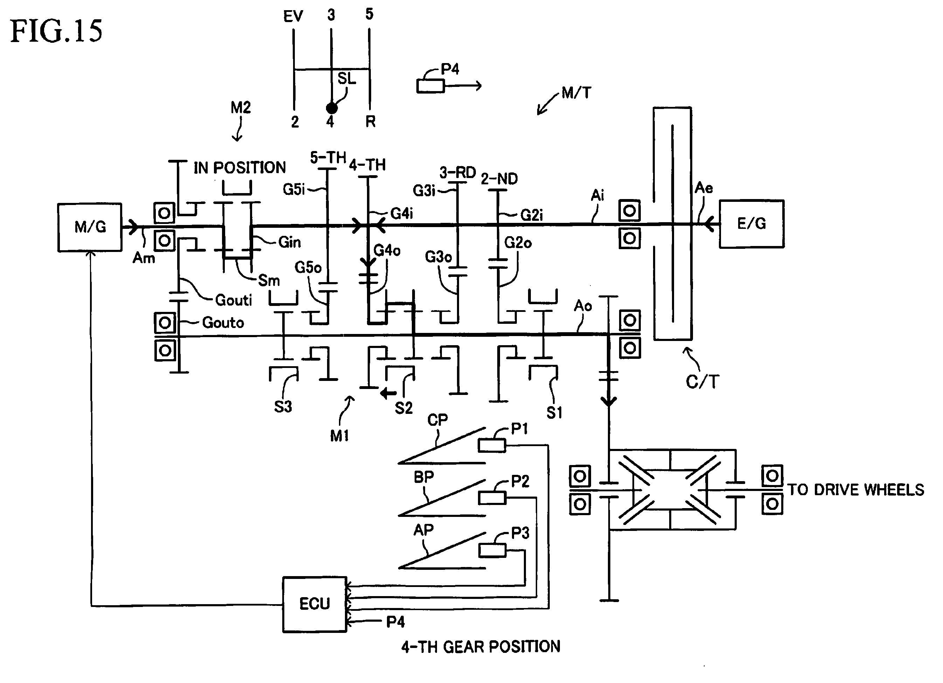

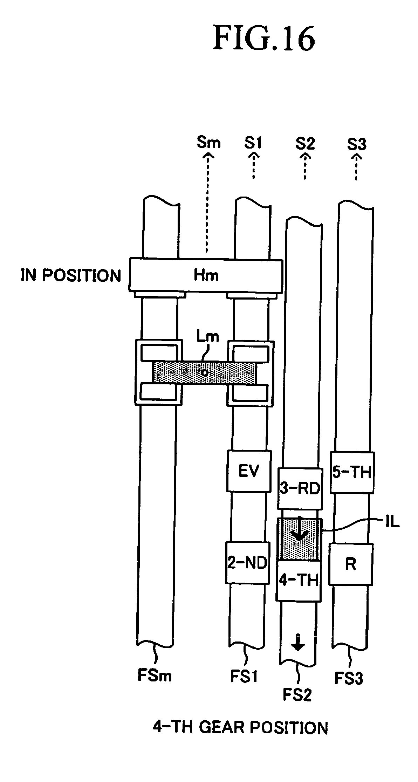

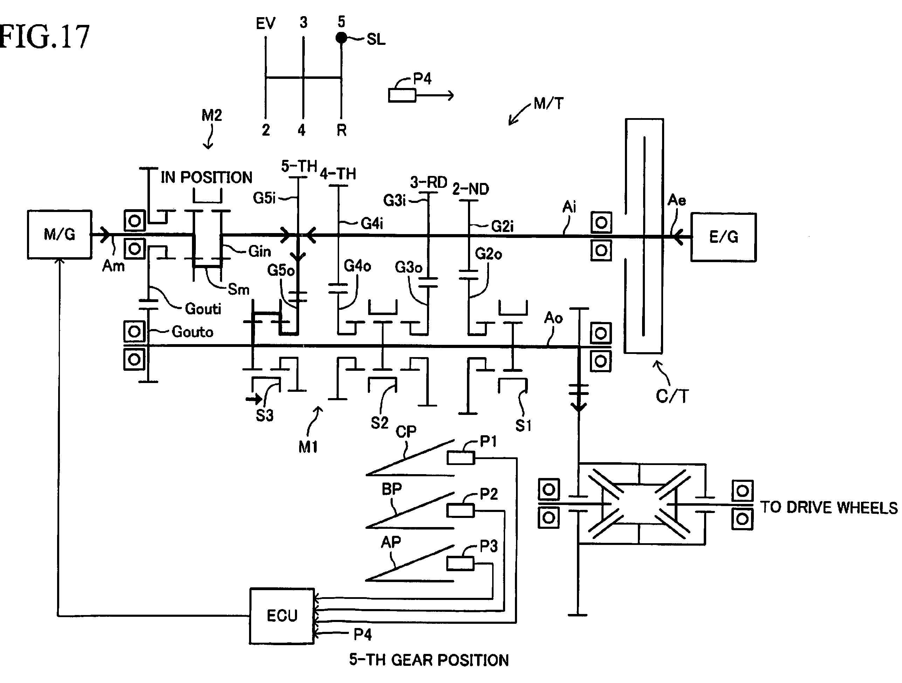

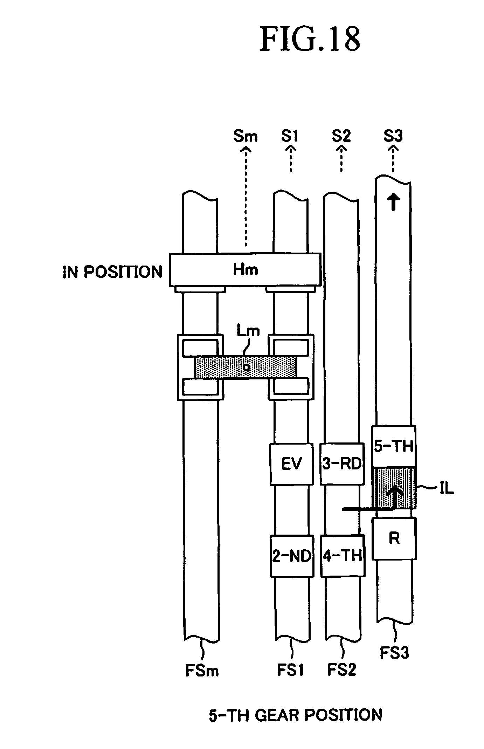

Next, changeover of the gear stage will be described with reference to FIGS. 1, 2, and 9 to 18. As shown in FIGS. 1 and 2, when the shift lever SL is in the "N position" (more accurately, the neutral position), all the sleeves S1, S2, and S3 are in their "neutral positions." In this state, the sleeves S1, S2, and S3 are not engaged with the corresponding idle gears. As described above, in this state, the sleeve Sm is in the "IN position" (see FIG. 4 also).

Therefore, when the shift lever SL is in the "N position" (more accurately, the neutral position), no power transmission system is established between the input and output shafts Ai, Ao. In addition, the "IN connection state" is realized. Accordingly, by operating the engine E/G and bringing the friction clutch C/T into the engaged state, the MG shaft Am can be rotated and driven in a state in which the vehicle is stopped. That is, electrical power generated by the motor generator M/G in a state in which the vehicle is stopped can be stored in the battery (not shown).

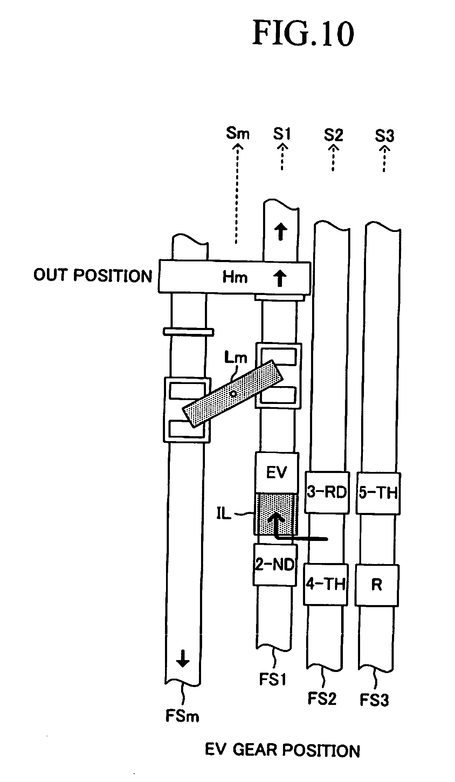

As shown in FIGS. 9 and 10, when the shift lever SL moves to the "EV gear shift completion position," the shaft FS1 (accordingly, the sleeve S1) is driven (upward in FIG. 10, rightward in FIG. 9) as a result of the inner lever IL of the S&S shaft driving a head for "EV" fixed to the shaft FS1 in an "EV" direction (upward in FIG. 10). As a result, the sleeve S1 moves from the "neutral position" to the "EV gear position." The sleeves S2, S3 are in their "neutral positions." As described above, in this state, the sleeve Sm is in the "OUT position" (see FIG. 5 as well).

In the case where the sleeve S1 moves to the "EV gear position," there does not exist an idle gear which engages with the sleeve S1 (and a stationary gear which always meshes with this idle gear). Accordingly, in a state in which the shift lever SL is in the "EV gear shift completion position," no power transmission system is established between the input and output shafts Ai, Ao. In addition, the "OUT connection state" is realized. Accordingly, there can be realized a state (i.e., "EV travel") in which the vehicle travels through use of the MG torque only, while maintaining the friction clutch C/T into the engaged state and maintaining the engine E/G in a stopped state (a state in which rotation of the output shaft Ae of the engine E/G is stopped) (see a thick line in FIG. 9). Notably, the EV gear shift completion position can be distinguished from the neutral position on the basis of, for example, an output from the shift position sensor P4, an output from a sensor which detects the position of the S&S shaft, or the like.

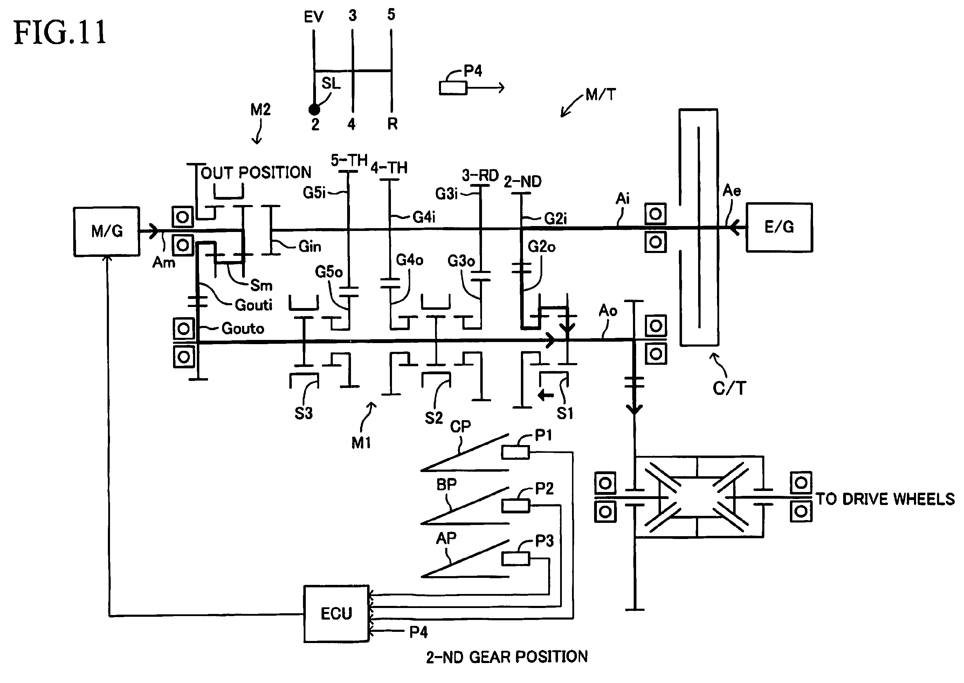

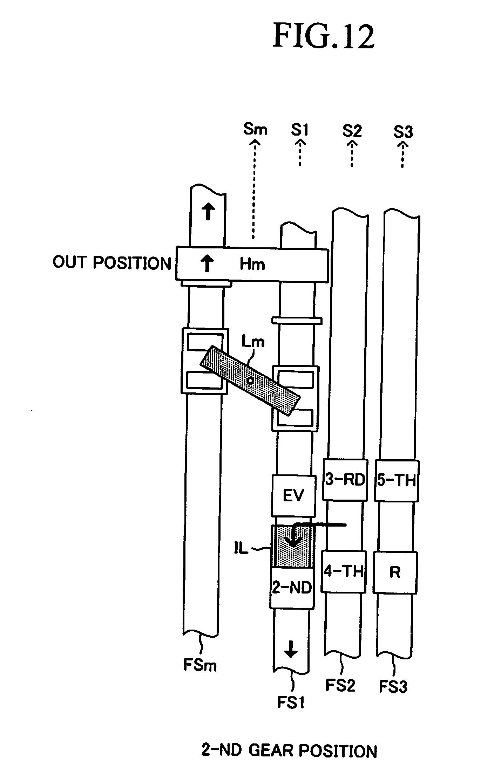

As shown in FIGS. 11 and 12, when the shift lever SL moves to the "2-nd gear shift completion position," the shaft FS1 (accordingly, the sleeve S1) is driven (downward in FIG. 12, leftward in FIG. 11) as a result of the inner lever IL driving a head for "2-nd gear" fixed to the shaft FS1 in a "2-nd gear" direction (downward in FIG. 12). As a result, the sleeve S1 moves from the "neutral position" to the "2-nd gear position." The sleeves S2, S3 are in their "neutral positions." As described above, in this state, the sleeve Sm is in the "OUT position" (see FIG. 7 as well).

In this state, the sleeve S1 engages with an idle gear G2o provided on the output shaft Ao. The idle gear G2o always meshes with a stationary gear G2i provided on the input shaft Ai. As a result, a power transmission system having a speed reduction ratio for the "2-nd gear" is established for the EG torque between the input shaft Ai and the output shaft Ao via the "gears G2i and G2o." Namely, the MT speed reduction ratio becomes (the number of teeth of the gear G2o/the number of teeth of the gear G2i) (= the speed reduction ratio of the "2-nd gear." In addition, the "OUT connection state" is realized. Accordingly, there can be realized a state (i.e., "HV travel") in which the vehicle travels through use of both the MG torque and the EG torque (see a thick line in FIG. 11). Also, since the "OUT connection state" is realized, the MG torque is transmitted without being transmitted through the internal route of the manual transmission M/T having a complicated mechanism. Therefore, transmission loss of the MG torque can be reduced.

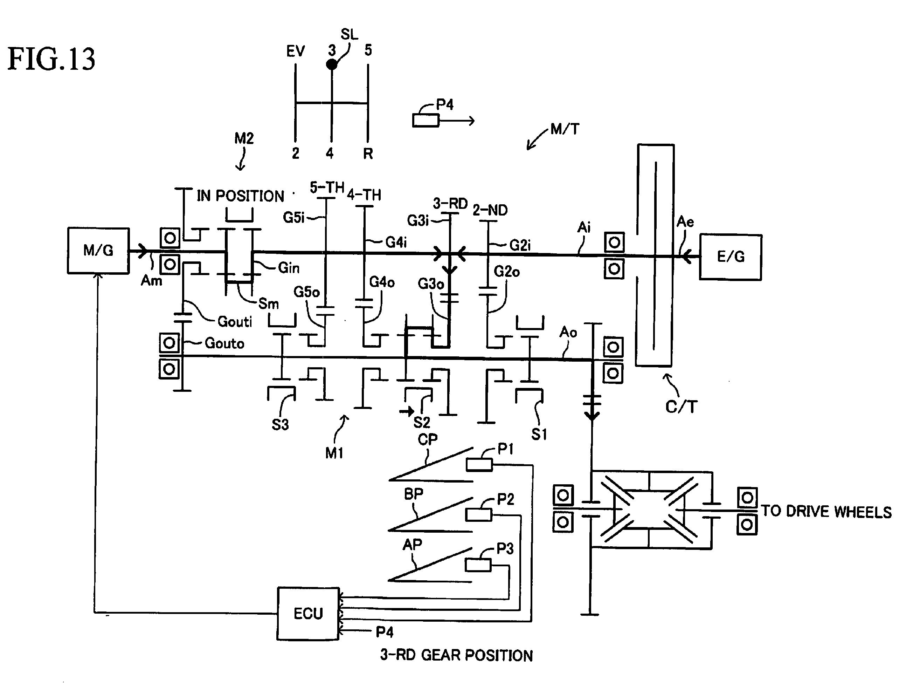

As shown in FIGS. 13 to 18, in the case where the shift lever SL is in any of the "3-rd gear shift completion position" to the "5-th gear shift completion position," as in the case where the shift lever SL is in the "2-nd gear shift completion position," a power transmission system having a speed reduction ratio for the "N-th gear" is established between the input shaft Ai and the output shaft Ao via the "gears GNi and GNo" (N: 3 to 5). At that time, the MT speed reduction ratio becomes (the number of teeth of the gear GNo/the number of teeth of the gear GNi) (= the speed reduction ratio of the "N-th gear" (N: 3 to 5). The MT speed reduction ratio gradually decreases from the "2-nd speed" toward the "5-th speed." In addition, the "IN connection state" is realized. Accordingly, the "HV travel" can be realized as in the case where the 2-nd gear" is selected. Also, since the "IN connection state" is realized, through adjustment of the gear stage of the manual transmission M/T, the rotational speed of the MG shaft Am can be readily maintained in a range in which the energy conversion efficiency (more specifically, the efficiency in generation of drive torque, regeneration torque, etc.) is satisfactorily high.

As described above, the manual transmission M/T includes the MT transmission mechanism M1 which can selectively set the MT speed reduction ratio to one of four values corresponding to the "2-nd gear" to the "5-th gear." The MT transmission mechanism M1 is constituted by the stationary gear GNi, the idle gear GNo, the sleeves S1 to S3, the fork shafts FS1 to FS3, etc. (N: 2 to 5).

### (Control of the engine E/G)

The control of the engine E/G by the present apparatus is generally performed as follows. When the vehicle is stopped or the "N (neutral)" or the "EV gear" is selected, the engine E/G is maintained in a stopped state (a state in which fuel injection is not performed). When a gear stage for HV travel (any of the "2-nd gear" to "the 5-th gear") is selected in a state in which the engine E/G is stopped, the engine E/G is started (fuel injection is started). In periods during which the engine E/G is operating (fuel injection is being performed), the EG torque is controlled on the basis of the accelerator opening, etc. When the "N" or the "EV gear" is selected or the vehicle stops, the engine E/G is again maintained in the stopped state.

### (Control of the motor generator M/G)

The control of the motor generator M/G by the present apparatus is generally performed as follows. When the vehicle is stopped or the "N" is selected, the motor generator M/G is maintained in a stopped state (the MG torque = 0). When the "EV gear" is selected in a state in which the motor generator M/G is in the stopped state, normal start control utilizing the MG torques is started. In the normal start control, the MG torque is controlled on the basis of the accelerator opening and the clutch stroke. The MG torque in the "normal start control" is determined by making use of a map or the like which is previously created for an "ordinary vehicle which includes a manual transmission and a friction clutch and which includes an internal combustion engine only as a power source," the map defining the relation between "accelerator opening and clutch stroke" and "torque of the internal combustion engine transmitted to the input shaft of the manual transmission via the clutch" for the cases where the vehicle starts in the "1-st gear." After completion of the normal start control, the MG torque is controlled on the basis of the accelerator opening, etc. when the "EV gear" is selected or one of the "2-nd gear" to the "5-th gear" (a plurality of gear stages for HV travel). When the vehicle stops, the motor generator M/G is again maintained in the stopped state.

### (Action and effects)

As described above, in the manual transmission M/T according to the embodiment of the present invention, while a driver is performing the shift operation of the shift lever SL (operation in the front-rear direction of the vehicle), the connection state of the MG shaft (changeover between the IN connection state and the OUT connection state) is performed. In other words, while performing the shift operation of the shift lever SL, the driver receives a shock generated as a result of changing the connection state of the MG shaft. In general, a human being becomes less likely to sense a shock or the like from the outside, when he or she performs some operation. For the above-described reason, the present manual transmission M/T makes the driver less likely to sense the shock generated as a result of changing the connection state of the MG shaft.

The present invention is not limited to the above-described embodiment, and various modifications may be employed without departing from the scope of the present invention. For example, in the above-described embodiment, all the sleeves S1, S2, S3 (and the corresponding idle gears) are provided on the output shaft Ao. However, all the sleeves S1, S2, S3 (and the corresponding idle gears) may be provided on the input shaft Ai. Alternatively, some of the sleeves S1, S2, S3 (and the corresponding idle gears) may be provided on the output shaft Ao, and the remaining sleeve(s) (and the corresponding idle gear(s)) may be provided on the input shaft Ai.

In the above-described embodiment, the connection state of the MG shaft is changed during the shift operation. However, the embodiment may be configured such that the connection state of the MG shaft is changed during the selection operation.

In the above-described embodiment, the changeover from the "IN connection state" to the "OUT connection state" (or changeover from the "OUT connection state" to the "IN connection state") is performed not only when the shift lever SL moves from the neutral position to the "EV gear" shift completion position (or from the "EV gear" shift completion position to the neutral position) but also when the shift lever SL moves from the neutral position to the "2-nd gear" shift completion position (or from the "2-nd gear" shift completion position to the neutral position). However, the embodiment may be modified such that the changeover from the "IN connection state" to the "OUT connection state" (or changeover from the "OUT connection state" to the "IN connection state") is performed only when the shift lever SL moves from the neutral position to the "EV gear" shift completion position (or from the "EV gear" shift completion position to the neutral position) (when the shift lever SL is in the 2-nd gear shift completion position, the "IN connection state" is maintained). In this case, the changeover shaft FSm, etc. become unnecessary.

In the above-described embodiment, the plurality of gear stages includes a "gear stage in which no power transmission system is established between the input and output shafts (other than the neutral)" (the EV gear stage). However, the embodiment may be modified such that all the plurality of gear stages are gear stages in which a power transmission system is established between the input and output shafts. In this case, the "EV gear" is changed to the "1-st gear" so that HV travel can be performed in all the 1-st to 5-th gear stages or positions.

## Claims

1. A manual transmission (M/T) for a vehicle having an internal combustion engine (E/G) and an electric motor (M/G) as power sources, said manual transmission (M/T) comprising:
an input shaft (Ai) for receiving power from the internal combustion engine; an output shaft (Ao) for outputting power to a drive wheel of the vehicle; and
a transmission mechanism (M1) which selectively enters any of a plurality of gear stages (EV gear stage, 2-nd gear to 5-th gear stages) when a shift operation member (SL) is selectively moved on a shift pattern by a driver to respective shift completion positions corresponding to the gear stages; and
a connection changeover mechanism (M2) which selectively realizes an IN connection state in which the output shaft (Am) of the electric motor is connected to the input shaft of the transmission in a power transmissible manner and an OUT connection state in which the output shaft of the electric motor is connected to the output shaft of the transmission in a power transmissible manner,
**characterized in that** the transmission mechanism is configured such that the moving operation of the shift operation member to one of the respective shift completion positions corresponding to the plurality of gear stages is achieved by setting the position of the shift operation member to a corresponding selection position through a selection operation which is an operation in a left-right direction of the vehicle in a state in which no power transmission system is established between the input shaft and the output shaft, and subsequently moving the shift operation member from the corresponding selection position to a corresponding shift completion position through a shift operation which is an operation in a front-rear direction of the vehicle; and
the connection changeover mechanism is configured to switch the connection state of the output shaft of the electric motor from the IN connection state to the OUT connection state when the position of the shift operation member moves from a selection position corresponding to a first gear stage (EV gear stage) of the plurality of gear stages to a shift completion position corresponding to the first gear stage, and to switch the connection state of the output shaft of the electric motor from the OUT connection state to the IN connection state when the position of the shift operation member moves from the shift completion position corresponding to the first gear stage to the selection position corresponding to the first gear stage.

2. A manual transmission according to claim 1, wherein
the transmission mechanism includes:
a plurality of stationary gears (G2i, G3i, G4i, G5i, G6i) non-rotatably provided on the input shaft or the output shaft and corresponding to the plurality of gear stages;
a plurality of idle gears (G2o, G3o, G4o, G5o, G6o) rotatably provided on the input shaft or the output shaft, corresponding to the plurality of gear stages, and always meshing with the stationary gears of the corresponding gear stages;
a plurality of sleeves (S1, S2, S3) provided on corresponding one of the input shaft and the output shaft such that the sleeves cannot rotate in relation to the corresponding shaft and can axially move in relation to the corresponding shaft, each of the sleeves being capable of engaging with a corresponding one of the plurality of idle gears so as to non-rotatably fix the corresponding idle gear to the corresponding shaft;
a plurality of fork shafts (FS1, FS2, FS3) respectively connected to the plurality of sleeves and being movable in the axial direction; and
a shift and selection shaft which causes one of movement in the direction of its axis and rotation around the axis as a result of the selection operation of the shift operation member, and causes the other of the movement in the direction of its axial and the rotation around the axis as a result of the shift operation of the shift operation member,
the transmission mechanism being configured such that a corresponding fork shaft is selected from the plurality of fork shafts through the selection operation of the shift operation member, and an inner lever (IL) projecting from a side surface of the shift and selection shaft pushes and moves the selected fork shaft in its axial direction trough the shift operation of the shift operation member whereby a corresponding gear stage is achieved; and
the connection changeover mechanism includes:
a moving member (Hm) which is movable, the connection state of the output shaft of the electric motor being set to the IN connection state when the moving member is in a first position and being set to the OUT connection state when the moving member is in a second position, wherein
when the position of the shift operation member moves from the selection position corresponding to the first gear stage to the shift completion position corresponding to the first gear stage during the shift operation of the shift operation member, the position of the moving member is changed from the first position to the second position as a result of an axial movement of a fork shaft (FS1) corresponding to the first gear stage; and
when the position of the shift operation member moves from the shift completion position corresponding to the first gear stage to the selection position corresponding to the first gear stage during the shift operation of the shift operation member, the position of the moving member is changed from the second position to the first position as a result of an axial movement of the fork shaft (FS1) corresponding to the first gear stage.

3. A manual transmission according to claim 2, wherein
on the shift pattern, the shift completion position corresponding to the first gear stage is disposed frontward, with respect to the front-rear direction of the vehicle, of the selection position corresponding to the first gear stage, and a shift completion position corresponding to a second gear stage is disposed rearward, with respect to the front-rear direction of the vehicle, of the selection position corresponding to the first gear stage; and
the connection changeover mechanism is configured to switch the connection state of the output shaft of the electric motor from the IN connection state to the OUT connection state when the position of the shift operation member moves from a selection position corresponding to the second gear stage to a shift completion position corresponding to the second gear stage, and to switch the connection state of the output shaft of the electric motor from the OUT connection state to the IN connection state when the position of the shift operation member moves from the shift completion position corresponding to the second gear stage to the selection position corresponding to the second gear stage.

4. A manual transmission according to claim 3, wherein
a single common fork shaft (FS1) serves as the fork shaft corresponding to the first gear stage and the fork shaft corresponding to the second gear stage; and
the connection changeover mechanism is configured such that
when the position of the shift operation member moves from the selection position corresponding to the second gear stage to the shift completion position corresponding to the second gear stage during the shift operation of the shift operation member, the position of the moving member is changed from the first position to the second position as a result of an axial movement of the common fork shaft; and
when the position of the shift operation member moves from the shift completion position corresponding to the second gear stage to the selection position corresponding to the second gear stage during the shift operation of the shift operation member, the position of the moving member is changed from the second position to the first position as a result of an axial movement of the common fork shaft.

5. A manual transmission according to claim 4, wherein the connection changeover mechanism includes:
a changeover shaft (FSm) disposed in parallel with the common fork shaft and coupled with the common fork shaft via a link mechanism (Lm) such that when the common fork shaft moves toward one side in the axial direction, the changeover shaft moves in the opposite side in the axial direction; and
a coupling mechanism (Hm, P, G1, Gm) which integrally couples the moving member to the common fork shaft when the position of the shift operation member moves between the selection position corresponding to the first gear stage and the shift completion position corresponding to the second gear stage, and integrally couples the moving member to the changeover shaft when the position of the shift operation member moves between the selection position corresponding to the second gear stage and the shift completion position corresponding to the second gear stage.

## Patentansprüche

1. Handschaltgetriebe (M/T) für ein Fahrzeug, das einen Verbrennungsmotor (E/G) und einen Elektromotor (M/G) als Leistungsquellen aufweist, wobei das Handschaltgetriebe (M/T) umfasst:
eine Eingangswelle (Ai) zum Entgegennehmen von Leistung von dem Verbrennungsmotor;
eine Ausgangswelle (Ao) zum Ausgeben von Leistung an ein Antriebsrad des Fahrzeugs; und
einen Getriebemechanismus (M1), der selektiv eine beliebige aus einer Vielzahl von Gangstufen (EV-Gangstufe, 2. Gangstufe bis 5. Gangstufe) einnimmt, wenn ein Schaltbetätigungsglied (SL) von einem Fahrzeuglenker auf einem Schaltschema selektiv zu jeweiligen Schaltvollendungspositionen, die den Gangstufen entsprechen, bewegt wird; und
einen Verbindungsumschaltmechanismus (M2), der selektiv einen EIN-Verbindungszustand, in dem die Ausgangswelle (Am) des Elektromotors mit der Eingangswelle des Getriebes auf kraftübertragungsfähige Weise verbunden ist, und einen AUS-Verbindungszustand, in dem die Ausgangswelle des Elektromotors mit der Ausgangswelle des Getriebes auf kraftübertragungsfähige Weise verbunden ist, herstellt,
**dadurch gekennzeichnet, dass** der Getriebemechanismus derart ausgebildet ist, dass die Bewegungsbetätigung des Schaltbetätigungsglieds zu einer der jeweiligen Schaltvollendungspositionen, die der Vielzahl von Gangstufen entsprechen, erreicht wird durch Stellen der Position des Schaltbetätigungsglieds auf eine entsprechende Wählposition durch eine Wählbetätigung, die eine Betätigung in einer Links-Rechts-Richtung des Fahrzeugs ist, in einem Zustand, in dem zwischen der Eingangswelle und der Ausgangswelle kein Kraftübertragungssystem hergestellt ist, und hernach durch Bewegen des Schaltbetätigungsglieds von der entsprechenden Wählposition zu einer entsprechenden Schaltvollendungsposition durch eine Schaltbetätigung, die eine Betätigung in einer Front-Heck-Richtung des Fahrzeugs ist; und
der Verbindungsumschaltmechanismus dazu ausgebildet ist, den Verbindungszustand der Ausgangswelle des Elektromotors von dem EIN-Verbindungszustand zu dem AUS-Verbindungszustand umzuschalten, wenn sich die Position des Schaltbetätigungsglieds von einer Wählposition, die einer ersten Gangstufe (EV-Gangstufe) aus der Vielzahl von Gangstufen entspricht, zu einer Schaltvollendungsposition bewegt, die der ersten Gangstufe entspricht, und den Verbindungszustand der Ausgangswelle des Elektromotors von dem AUS-Verbindungszustand zu dem EIN-Verbindungszustand umzuschalten, wenn sich die Position des Schaltbetätigungsglieds von der Schaltvollendungsposition, die der ersten Gangstufe entspricht, zu der Wählposition, die der ersten Gangstufe entspricht, bewegt.

2. Handschaltgetriebe nach Anspruch 1, wobei
der Getriebemechanismus umfasst:
eine Vielzahl von Festrädern (G2i, G3i, G4i, G5i, G6i), die drehfest auf der Eingangswelle oder der Ausgangswelle vorgesehen sind und der Vielzahl von Gangstufen entsprechen;
eine Vielzahl von Losrädern (G2o, G3o, G4o, G5o, G6o), die drehbar auf der Eingangswelle oder der Ausgangswelle vorgesehen sind, der Vielzahl von Gangstufen entsprechen und stets mit den Festrädern der entsprechenden Gangstufen kämmen;
eine Vielzahl von Muffen (S1, S2, S3), die an einer entsprechenden aus der Gruppe umfassend die Eingangswelle und die Ausgangswelle vorgesehen sind, derart, dass sich die Muffen in Bezug auf die entsprechende Welle nicht drehen können und sich in Bezug auf die entsprechende Welle axial bewegen können, wobei jede der Muffen in der Lage ist, mit einem entsprechenden aus der Vielzahl von Losrädern in Eingriff zu kommen, um das entsprechende Losrad drehfest an der entsprechenden Welle zu befestigen;
eine Vielzahl von Gabelwellen (FS1, FS2, FS3), die jeweils mit der Vielzahl von Muffen verbunden sind und in der axialen Richtung beweglich sind; und
eine Schalt- und Wählwelle, die infolge der Wählbetätigung des Schaltbetätigungsglieds eine aus der Gruppe umfassend Bewegung in der Richtung ihrer Achse und Drehung um die Achse bewirkt und infolge der Schaltbetätigung des Schaltbetätigungsglieds die andere aus der Gruppe umfassend die Bewegung in der Richtung ihrer Achse und die Drehung um ihre Achse bewirkt,
wobei der Getriebemechanismus derart ausgebildet ist, dass eine entsprechende Gabelwelle aus der Vielzahl von Gabelwellen durch die Wählbetätigung des Schaltbetätigungsglieds ausgewählt wird und ein innerer Hebel (IL), der von einer Seitenoberfläche der Schalt- und Wählwelle vorsteht, durch die Schaltbetätigung des Schaltbetätigungsglieds die ausgewählte Gabelwelle in ihre axiale Richtung drückt und bewegt, wodurch eine entsprechende Gangstufe erreicht wird; und
der Verbindungsumschaltmechanismus umfasst:
ein Bewegungsglied (Hm), das beweglich ist, wobei der Verbindungszustand der Ausgangswelle des Elektromotors auf den EIN-Verbindungszustand gestellt wird, wenn sich das Bewegungsglied in einer ersten Position befindet, und auf den AUS-Verbindungszustand gestellt wird, wenn sich das Bewegungsglied in einer zweiten Position befindet, wobei,
wenn sich während der Schaltbetätigung des Schaltbetätigungsglieds die Position des Schaltbetätigungsglieds von der Wählposition, die der ersten Gangstufe entspricht, zu der Schaltvollendungsposition, die der ersten Gangstufe entspricht, bewegt, die Position des Bewegungsglieds infolge einer axialen Bewegung einer Gabelwelle (FS1), die der ersten Gangstufe entspricht, von der ersten Position zu der zweiten Position geändert wird; und,
wenn sich während der Schaltbetätigung des Schaltbetätigungsglieds die Position des Schaltbetätigungsglieds von der Schaltvollendungsposition, die der ersten Gangstufe entspricht, zu der Wählposition, die der ersten Gangstufe entspricht, bewegt, die Position des Bewegungsglieds infolge einer axialen Bewegung der Gabelwelle (FS1), die der ersten Gangstufe entspricht, von der zweiten Position zu der ersten Position geändert wird.

3. Handschaltgetriebe nach Anspruch 2, wobei auf dem Schaltschema die Schaltvollendungsposition, die der ersten Gangstufe entspricht, in Bezug auf die Front-Heck-Richtung des Fahrzeugs von der Wählposition, die der ersten Gangstufe entspricht, nach vorne angeordnet ist, und eine Schaltvollendungsposition, die einer zweiten Gangstufe entspricht, in Bezug auf die Front-Heck-Richtung des Fahrzeugs von der der Wählposition, die der ersten Gangstufe entspricht, nach hinten angeordnet ist; und der Verbindungsumschaltmechanismus dazu ausgebildet ist, den Verbindungszustand der Ausgangswelle des Elektromotors von dem EIN-Verbindungszustand zu dem AUS-Verbindungszustand umzuschalten, wenn sich die Position des Schaltbetätigungsglieds von einer Wählposition, die der zweiten Gangstufe entspricht, zu einer Schaltvollendungsposition, die der zweiten Gangstufe entspricht, bewegt, und den Verbindungszustand der Ausgangswelle des Elektromotors von dem AUS-Verbindungszustand zu dem EIN-Verbindungszustand umzuschalten, wenn sich die Position des Schaltbetätigungsglieds von der Schaltvollendungsposition, die der zweiten Gangstufe entspricht, zu der Wählposition, die der zweiten Gangstufe entspricht, bewegt.

4. Handschaltgetriebe nach Anspruch 3, wobei
eine einzige gemeinsame Gabelwelle (FS1) als die Gabelwelle, die der ersten Gangstufe entspricht, und die Gabelwelle, die der zweiten Gangstufe entspricht, dient; und
der Verbindungsumschaltmechanismus derart ausgebildet ist, dass,
wenn sich während der Schaltbetätigung des Schaltbetätigungsglieds die Position des Schaltbetätigungsglieds von der Wählposition, die der zweiten Gangstufe entspricht, zu der Schaltvollendungsposition, die der zweiten Gangstufe entspricht, bewegt, die Position des Bewegungsglieds infolge einer axialen Bewegung der gemeinsamen Gabelwelle von der ersten Position zu der zweiten Position geändert wird; und,
wenn sich während der Schaltbetätigung des Schaltbetätigungsglieds die Position des Schaltbetätigungsglieds von der Schaltvollendungsposition, die der zweiten Gangstufe entspricht, zu der Wählposition, die der zweiten Gangstufe entspricht, bewegt, die Position des Bewegungsglieds infolge einer axialen Bewegung der gemeinsamen Gabelwelle von der zweiten Position zu der ersten Position geändert wird.

5. Handschaltgetriebe nach Anspruch 4, wobei der Verbindungsumschaltmechanismus umfasst:
eine Umschaltwelle (FSm), die parallel zu der gemeinsamen Gabelwelle angeordnet ist und mit der gemeinsamen Gabelwelle über einen Verbindungsmechanismus (Lm) derart gekoppelt ist, dass sich, wenn sich die gemeinsame Gabelwelle in der axialen Richtung in Richtung einer Seite bewegt, die Umschaltwelle in die in der axialen Richtung entgegengesetzte Seite bewegt; und
einen Kopplungsmechanismus (Hm, P, G1, Gm), der das Bewegungsglied einstückig mit der gemeinsamen Gabelwelle koppelt, wenn sich die Position des Schaltbetätigungsglieds zwischen der Wählposition, die der ersten Gangstufe entspricht, und der Schaltvollendungsposition, die der zweiten Gangstufe entspricht, bewegt, und das Bewegungsglied einstückig mit der Umschaltwelle koppelt, wenn sich die Position des Schaltbetätigungsglieds zwischen der Wählposition, die der zweiten Gangstufe entspricht, und der Schaltvollendungsposition, die der zweiten Gangstufe entspricht, bewegt.

## Revendications

1. Transmission manuelle (M/T) pour un véhicule présentant un moteur à combustion interne (E/G) et un moteur électrique (M/G) comme sources d'énergie, ladite transmission manuelle (M/T) comprenant :
un arbre d'entrée (Ai) pour recevoir de l'énergie du moteur à combustion interne ;
un arbre de sortie (Ao) pour fournir l'énergie à une roue d'entraînement du véhicule ; et
un mécanisme de transmission (M1) qui entre sélectivement n'importe laquelle d'une pluralité d'étages d'engrenage (étage d'engrenage EV, 2e à 5e étages d'engrenage) lorsqu'un élément d'opération de changement (ST) est déplacé de manière sélective sur un motif de changement par un conducteur vers des positions d'achèvement de changement respectives correspondant aux étages d'engrenage ; et
un mécanisme de changement de connexion (M2) qui réalise sélectivement un état de connexion IN, dans lequel l'arbre de sortie (Am) du moteur électrique est connecté à l'arbre d'entrée de la transmission de manière à pouvoir transmettre l'énergie et un état de connexion OUT, dans lequel l'arbre de sortie du moteur électrique est connecté à l'arbre de sortie de la transmission de manière à pouvoir transmettre l'énergie,
**caractérisée en ce que**
le mécanisme de transmission est configuré de sorte que l'opération de déplacement de l'élément d'opération de changement vers l'une des positions d'achèvement de changement respectives correspondant à la pluralité d'étages d'engrenage soit atteinte par placement de la position de l'élément d'opération de changement dans une position de sélection correspondante par une opération de sélection qui est une opération dans une direction gauche-droite du véhicule dans un état, dans lequel aucun système de transmission d'énergie n'est établi entre l'arbre d'entrée et l'arbre de sortie, et le déplacement ultérieur de l'élément d'opération de changement de la position de sélection correspondante à une position d'achèvement de changement correspondante par une opération de changement qui est une opération dans une direction avant-arrière du véhicule ; et
le mécanisme de changement de connexion est configuré pour transférer l'état de connexion de l'arbre de sortie du moteur électrique de l'état de connexion IN à l'état de connexion OUT lorsque la position de l'élément d'opération de changement se déplace d'une position de sélection correspondant à un premier étage d'engrenage (étage d'engrenage EV) de la pluralité d'étages d'engrenage dans une position d'achèvement de changement correspondant au premier étage d'engrenage, et pour transférer l'état de connexion de l'arbre de sortie du moteur électrique de l'état de connexion OUT à l'état de connexion IN lorsque la position de l'élément d'opération de changement se déplace de la position d'achèvement de changement correspondant au premier étage d'engrenage dans la position de sélection correspondant au premier étage d'engrenage.

2. Transmission manuelle selon la revendication 1, dans laquelle
le mécanisme de transmission comporte :
une pluralité d'engrenages stationnaires (G2i, G3i, G4i, G5i, G6i) prévus de manière non rotative sur l'arbre d'entrée ou l'arbre de sortie et correspondant à la pluralité d'étages d'engrenage ;
une pluralité d'engrenages de ralenti (G2o, G3o, G4o, G5o, G6o) prévus de manière rotative sur l'arbre d'entrée ou l'arbre de sortie, correspondant à la pluralité d'étages d'engrenage et s'engrenant toujours avec les engrenages stationnaires des étages d'engrenage correspondants ;
une pluralité de manchons (S1, S2, S3) prévus sur un arbre correspondant de l'arbre d'entrée et de l'arbre de sortie de sorte que les manchons ne puissent pas tourner par rapport à l'arbre correspondant et puissent axialement se déplacer par rapport à l'arbre correspondant, chacun des manchons étant capable de s'engager avec un engrenage correspondant de la pluralité des engrenages de sorte à fixer de manière non rotative l'engrenage de ralenti correspondant à l'arbre correspondant ;
une pluralité d'arbres de fourche (FS1, FS2, FS3) reliés respectivement à la pluralité de manchons et étant mobiles dans la direction axiale ; et
un arbre de changement et sélection qui provoque un de mouvement dans la direction de son axe et rotation autour de l'axe suite à l'opération de sélection de l'élément d'opération de changement et cause l'autre du mouvement dans la direction de son axe et la rotation autour de l'axe suite à l'opération de changement de l'élément d'opération de changement,
le mécanisme de transmission étant configuré de sorte qu'un arbre de fourche correspondant soit sélectionné parmi la pluralité d'arbres de fourche par l'opération de sélection de l'élément d'opération de changement, et un levier intérieur (IL) faisant saillie d'une surface latérale de l'arbre de changement et sélection pousse et déplace l'arbre de fourche sélectionné dans sa direction axiale par l'opération de changement de l'élément d'opération de changement, moyennant quoi un étage d'engrenage correspondant est atteint ; et
le mécanisme de changement de connexion comporte :
un élément mobile (Hm) qui est mobile, l'état de connexion de l'arbre de sortie du moteur électrique étant placé dans l'état de connexion IN lorsque l'élément mobile est dans une première position et étant placé dans l'état de connexion OUT lorsque l'élément mobile est dans une seconde position, dans lequel
lorsque la position de l'élément d'opération de changement se déplace de la position de sélection correspondant au premier étage d'engrenage dans la position d'achèvement de changement correspondant au premier étage d'engrenage pendant l'opération de changement de l'élément d'opération de changement, la position de l'élément mobile est changée de la première position à la seconde position suite à un mouvement axial d'un arbre de fourche (FS1) correspondant au premier étage d'engrenage ; et
lorsque la position de l'élément d'opération de changement se déplace de la position d'achèvement de changement correspondant au premier étage d'engrenage dans la position de sélection correspondant au premier étage d'engrenage pendant l'opération de changement de l'élément d'opération de changement, la position de l'élément mobile est changée de la seconde position à la première position suite à un mouvement axial de l'arbre de fourche (FS1) correspondant au premier étage d'engrenage.

3. Transmission manuelle selon la revendication 2, dans laquelle
sur le motif de changement, la position d'achèvement de changement correspondant au premier étage d'engrenage est agencée vers l'avant, par rapport à la direction avant-arrière du véhicule, de la position de sélection correspondant au premier étage d'engrenage, et une position d'achèvement de changement correspondant à un second étage d'engrenage est agencée vers l'arrière, par rapport à la direction avant-arrière du véhicule, de la position de sélection correspondant au premier étage d'engrenage ; et
le mécanisme de changement de connexion est configuré pour transférer l'état de connexion de l'arbre de sortie du moteur électrique de l'état de connexion IN à l'état de connexion OUT lorsque la position de l'élément d'opération de changement se déplace d'une position de sélection correspondant au second étage d'engrenage dans une position d'achèvement de changement correspondant au second étage d'engrenage et pour transférer l'état de connexion de l'arbre de sortie du moteur électrique de l'état de connexion OUT à l'état de connexion IN lorsque la position de l'élément d'opération de changement se déplace de la position d'achèvement de changement correspondant au second étage d'engrenage dans la position de sélection correspondant au second étage d'engrenage.

4. Transmission manuelle selon la revendication 3, dans laquelle
un seul arbre de fourche commun (FS1) sert d'arbre de fourche correspondant au premier étage d'engrenage et l'arbre de fourche correspondant au second étage d'engrenage ; et
le mécanisme de changement de connexion est configuré de sorte que
lorsque la position de l'élément d'opération de changement se déplace de la position de sélection correspondant au second étage d'engrenage dans la position d'achèvement de changement correspondant au second étage d'engrenage pendant l'opération de changement de l'élément d'opération de changement, la position de l'élément mobile est changée de la première position à la seconde position suite à un mouvement axial de l'arbre de fourche commun ; et
lorsque la position de l'élément d'opération de changement se déplace de la position d'achèvement de changement correspondant au second étage d'engrenage dans la position de sélection correspondant au second étage d'engrenage pendant l'opération de changement de l'élément d'opération de changement, la position de l'élément mobile est changée de la seconde position à la première position suite à un mouvement axial de l'arbre de fourche commun.

5. Transmission manuelle selon la revendication 4, dans laquelle le mécanisme de changement de connexion comporte :
un arbre de changement (FSm) agencé parallèlement à l'arbre de fourche commun et couplé à l'arbre de fourche commun par le biais d'un mécanisme de lien (Lm) de sorte que lorsque l'arbre de fourche commun se déplace vers un côté dans la direction axiale, l'arbre de changement se déplace dans le côté en regard dans la direction axiale ; et
un mécanisme de couplage (Hm, P, G1, Gm) qui couple intégralement l'élément mobile à l'arbre de fourche commun lorsque la position de l'élément d'opération de changement se déplace entre la position de sélection correspondant au premier étage d'engrenage et la position d'achèvement de changement correspondant au second étage d'engrenage, et couple intégralement l'élément mobile à l'arbre de changement lorsque la position de l'élément d'opération de changement se déplace entre la position de sélection correspondant au second étage d'engrenage et la position d'achèvement de changement correspondant au second étage d'engrenage.
